# EUROPEAN PATENT APPLICATION

(11) **EP 1 684 049 A1**
(43) Date of publication of application: **26.07.2006**
(21) Application number: 04793247.0
(22) Date of filing: 29.10.2004
(51) Int. Cl.: G01C 21/00, G08G 1/0969, G09B 29/10

(54) **NAVIGATION APPARATUS**

(30) Priority: 14.11.2003 JP 2003385376
(71) Applicant: MATSUSHITA ELECTRIC INDUSTRIAL CO., LTD., Kadoma-shi, Osaka 571-8501 (JP)
(72) Inventor: YOSHIOKA, Shinichi, Chikushi-gun, Fukuoka 811-1202 (JP)
(74) Representative: Pautex Schneider, Nicole Véronique
(86) International application number: PCT/JP2004/016146
(87) International publication number: WO 2005/047822

(57) **Abstract**

An object is to provide a navigation apparatus capable of outputting geographic information without depending on a display. When determining at step ST11 that a destination is assigned, the navigation apparatus interprets geography of an area around the assigned destination at step ST12, and generates geographic information for indicating the geography of the area around the destination as a voice output. Thereafter, the navigation apparatus outputs the voice output indicating the inputted geographic information through a loudspeaker.

## Description

### TECHNICAL FIELD

The present invention relates to a navigation apparatus, and more particularly to a navigation apparatus for outputting geographic information which provides a characteristic of an area around a user's destination and/or around a route to the destination.

### BACKGROUND ART

A conventional navigation apparatus searches among map data, after calculating a route to a destination assigned by a user, a major place to pass through or detours to (hereafter referred to as a "waypoint") as an intermediate target on the way to the destination. Thereafter, in accordance with the user's travel, the navigation apparatus displays a map of an area around a current position. Furthermore, the navigation apparatus selects among searched names of waypoints, a next waypoint to head toward, based on a waypoint which the user has already passed through and is closest to the current position, and displays an image on a display indicating where the user is currently traveling.

### DISCLOSURE OF THE INVENTION

### PROBLEMS TO BE SOLVED BY THE INVENTION

There are cases when a user would like to know the geography of an area around an assigned destination and/or around a certain point on a calculated route. However, in such cases, a conventional navigation apparatus has a problem that the only way for a user to know the geography of an area around a subject point is to scroll a display screen by using an input device, and after a map of the area around the subject point is displayed, the user must visually confirm the displayed map.

Therefore, an object of the present invention is to provide a navigation apparatus which is capable of outputting geographic information without depending on a display.

### SOLUTION TO THE PROBLEMS

To achieve the above object, the present invention has the following aspects. A first aspect of the present invention is a navigation apparatus comprising: a geography interpreting section for at least interpreting, after a destination is assigned by a user, geography of an area around the destination by using map data stored in a storage medium, and at least generating geographic information for indicating a characteristic of the area around the destination as a voice output; and a voice output section for outputting a voice output in accordance with the geographic information generated at the geography interpreting section.

### EFFECT OF THE INVENTION

According to the above aspect, a user can acquire, only by assigning a destination, voice output which provides at least geographic guidance on an area around the destination. Consequently, it is made possible to provide a navigation apparatus allowing the user to acquire geographic information without depending on a display.

The aforementioned and other objects, features, aspects and advantages of the present invention will become more apparent through the understanding of the following detailed description of the present invention when taken in conjunction with the accompanying drawings.

### BRIEF DESCRIPTION OF THE DRAWINGS

[FIG. 1] FIG. 1 is an external perspective view of a navigation apparatus according to each embodiment of the present invention.
[FIG. 2] FIG. 2 is a block diagram illustrating a specific structure of the navigation apparatus illustrated in FIG. 1.
[FIG. 3] FIG. 3 is a flowchart illustrating a processing procedure performed in a navigation apparatus according to a first embodiment.
[FIG. 4] FIG. 4 is a flowchart illustrating a detailed processing procedure of step ST12 denoted in FIG. 3.
[FIG. 5] FIG. 5 is a flowchart illustrating a processing procedure performed in a navigation apparatus according to a second embodiment.
[FIG. 6] FIG. 6 is a flowchart illustrating a detailed processing procedure of step ST33 denoted in FIG. 5.
[FIG. 7] FIG. 7 is a flowchart illustrating a processing procedure performed in a navigation apparatus according to a third embodiment.
[FIG. 8] FIG. 8 is a flowchart illustrating a processing procedure performed in a navigation apparatus according to a fourth embodiment.
[FIG. 9] FIG. 9 is a flowchart illustrating a processing procedure performed in a navigation apparatus according to a fifth embodiment.
[FIG. 10] FIG. 10 is a flowchart illustrating a processing procedure performed in a navigation apparatus according to a sixth embodiment.
[FIG. 11] FIG. 11 is a flowchart illustrating a processing procedure performed in a navigation apparatus according to a seventh embodiment.

### DESCRIPTION OF THE REFERENCE CHARACTERS

- 1: main body
- 11: memory card
- 12: slot
- 13: loudspeaker
- 14: GPS module
- 15: autonomous navigation sensor
- 16: operation section
- 17: process control section
- 18: voice processing section

### BEST MODE FOR CARRYING OUT THE INVENTION

### (First Embodiment)

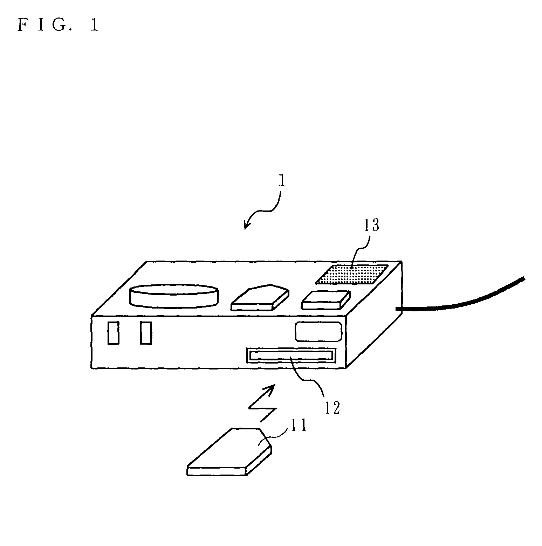

Fig. 1 is an external perspective view of a navigation apparatus according to a first embodiment of the present invention. The navigation apparatus of FIG. 1 is typically mounted on a mobile object such as a vehicle, and provides navigation guidance to a user. A main body 1 of such navigation apparatus is provided with a slot 12 for inserting a memory card 11 such as a SD card (registered trademark), and a loudspeaker 13.

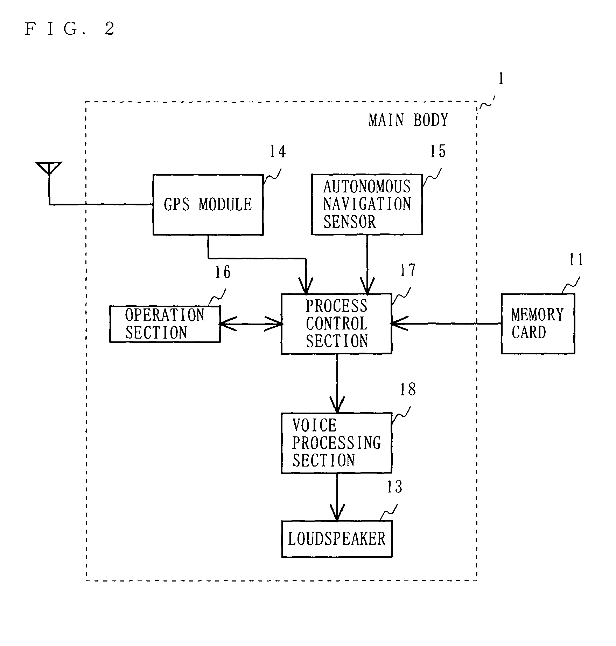

FIG. 2 is a block diagram illustrating a specific structure of the navigation apparatus of FIG. 1. In FIG. 2, the navigation apparatus comprises, in addition to the structure described in FIG. 1 with reference numbers, a GPS module 14, an autonomous navigation sensor 15, an operation section 16, a process control section 17, and a voice processing section 18.

Hereafter, each section of the navigation apparatus will be described specifically. The memory card 11 is a storage medium for storing map data. Since general and well-known map data may be employed, detailed description of the map data will be omitted. Note that though the map data is described as to be stored in a memory card in the present embodiment, it is not limited thereto, the map data may be stored in a storage medium such as a CD or a DVD.

The loudspeaker 13 at least outputs a voice output according to geographic information generated at the process control section 17. The geographic information in the present embodiment is outputted as voice data indicating a characteristic of an area around the user's destination and/or around a route to the destination.

The GPS module 14 receives a signal through an antenna, the signal being transmitted from an artificial satellite, and taken into a positioning system (e.g., GPS (Global Positioning System)) provided at the exterior of a vehicle. The GPS module 14 further generates, based on signals received from a plurality of GPS satellites, data indicating longitude, latitude and altitude of the navigation apparatus's current position, together with a direction of travel (hereafter referred to as GPS data), and outputs the data.

The autonomous navigation sensor 15 includes a geomagnetic sensor and an angular velocity sensor. The geomagnetic sensor detects and outputs an orientation of the vehicle based on geomagnetism (magnetic field of the earth). Also, the autonomous navigation sensor 15 includes at least either one of an acceleration sensor and a velocity sensor. The acceleration sensor detects and outputs a velocity of a vehicle.

The operation section 16 is typically configured with a key or a remote controller for inputting various instructions to the process control section 17. In the present embodiment, the operation section 16 is mainly used for allowing the user to input a destination.

The process control section 17 performs a process necessary for providing navigation guidance to the user. A typical process performed by the process control section 17 is generating the aforementioned geographic information.
The voice processing section 18 at least performs a process such as converting the geographic information generated at the process control section 17, i.e., voice data, to an analog signal, and outputs the signal to the loudspeaker 13 after amplification.

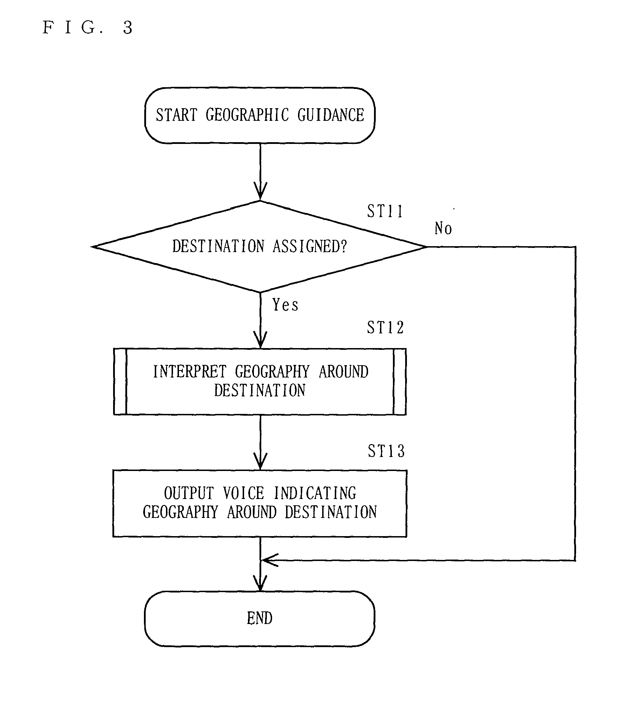

Next, by referring to a flowchart illustrated in FIG. 3, a processing procedure of geographic guidance according to the present navigation apparatus will be described. In FIG. 3, the process control section 17 determines whether a destination is assigned or not (step ST11). As mentioned above, the user inputs a destination by using the operation section 16. The operation section 16 outputs the inputted destination to the process control section 17. When determined at step ST11 as NO, the process control section 17 terminates the process shown in FIG. 3.

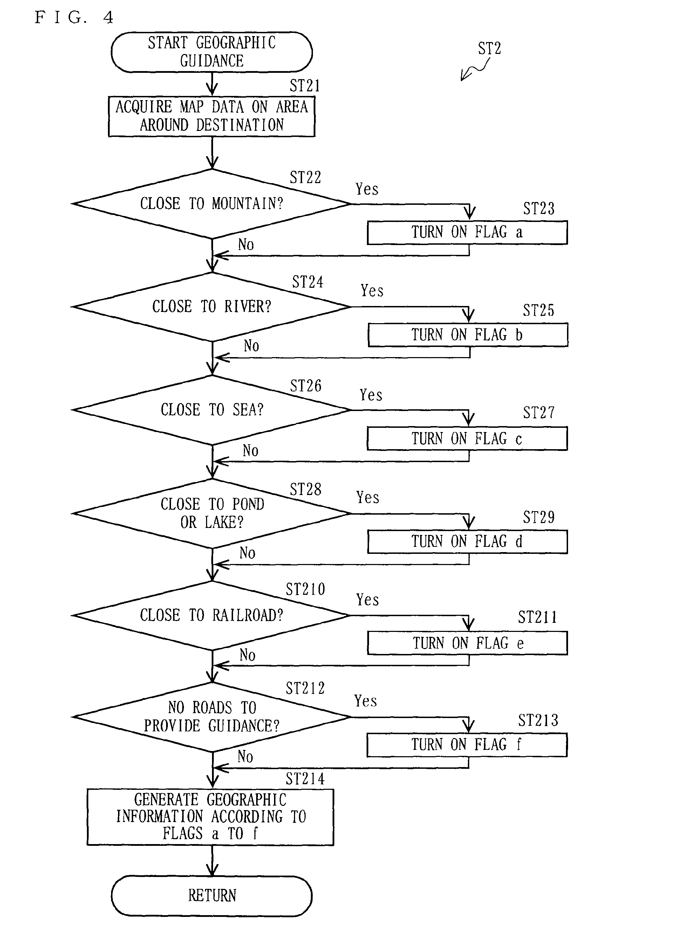

On the other hand, when determined as YES, the process control section 17 interprets geography of an area around the received destination (step ST12). FIG. 4 shows a flowchart illustrating a detailed processing procedure of step ST12 denoted in FIG. 3. In FIG. 4, the process control section 17 acquires a section of the area around the destination among the map data stored in the memory card 11 (step ST21). The map data acquired at step ST21 at least includes various information for indicating as a polygon, an object which exists in the area around the destination. Objects such as a sea, a lake, a pond/lake, a railroad, and a road, for example, are typical objects to be indicated as a polygon. In addition, for drawing a polygon, information on vertex and color code of each polygon is included in the map data. The map data also includes a map symbol to define an object which exists in the area around the destination. One example of an object to be indicated by the map symbol is a mountain. Furthermore, in order to generate geographic information with high accuracy, it is preferable that map data of an area in close vicinity of the destination is acquired at step ST21.

Subsequent to step ST21, the process control section 17 determines whether or not a map symbol to define a mountain is included in the map data of the area around the destination, i.e., determines whether or not a mountain exists in the area around the destination (step ST22) . When determined as YES, the process control section 17 sets flag a indicating that a mountain exists therein (step ST23).

When determined at step ST22 as NO, or after step ST23, the process control section 17 determines whether or not a color code used to draw a river is included in the map data of the area around the destination (step ST24). When determined as YES, the process control section 17 sets flag b indicating that a river exists in the area around the destination (step ST25).

When determined at step ST24 as NO, or after step ST25, the process control section 17 determines whether or not a color code to draw a sea is included in the map data of the area around the destination (step ST26). When determined as YES, the process control section 17 sets flag c indicating that a sea exists in the area around the destination (step ST27).

When determined at step ST26 as NO, or after step ST27, the process control section 17 determines whether or not a color code used to draw a pond or a lake is included in the map data of the area around the destination (step ST28). When determined as YES, the process control section 17 sets flag d indicating that a pond or lake exists in the area around the destination (step ST29).

When determined at step ST28 as NO, or after step ST29, the process control section 17 determines whether or not a color code to draw a railroad is included in the map data of the area around the destination (step ST210) . When determined as YES, the process control section 17 sets flag e indicating that a railroad exists in the area around the destination (step ST211).

When determined at step ST210 as NO, or after step ST211, the process control section 17 determines whether or not a color code for drawing a road is included in the map data of the area around the destination (step ST212). When determined as YES, the process control section 17 sets flag f indicating that there is no road in the area around the destination to provide guidance (step ST213).

When determined at step ST212 as NO, or after step ST213, the process control section 17 generates geographic information in accordance with flags a to f, and outputs the information to the voice processing section 18 (step ST214) . To give a specific example, in a case where flags c and f are set, the process control section 17 generates geographic information for indicating contents such as "the destination is close to the sea, without roads". Once above step ST214 is completed, the process control section 17 terminates the process illustrated in FIG. 4, i.e., step ST12 of FIG. 3.

In FIG. 3, the voice processing section 18 performs the process as mentioned above on the inputted geographic information, and outputs the processed information to the loudspeaker 13. The loudspeaker 13 outputs a voice output in accordance with the inputted geographic information (step ST13) . Consequently, the navigation apparatus provides the user with geographic guidance such as "the destination is close to the sea, without roads".

As described above, according to the present navigation apparatus, the user can acquire voice output which provides geographic guidance of the area around the destination only by assigning a destination. Therefore, the user can know the geography of the area around the destination without scrolling a display screen or viewing a displayed map as conventionally required. Thus, it is made possible to provide a navigation apparatus allowing the user to acquire geographic information without depending on a display.

In addition, according the present navigation apparatus, the process control section 17 generates geographic information on the area around the destination based on a color code for drawing a polygon, or a map symbol. Consequently, the necessity of having data dedicated for generating geographic information prepared in the map data of the memory card is omitted. In other words, the process control section 17 is capable of providing geographic guidance with use of the map data which already exists.

Though the navigation apparatus according to the above embodiment is described so as to provide geographic guidance on an area around a single destination, it is not limited thereto, but may provide geographic guidance on a waypoint to which the user detours before reaching the destination. As a waypoint is a point where the user is heading to, it is equivalent to the destination in this sense.

### (Second Embodiment)

A second embodiment of the present invention will be described next. As a structure of a navigation apparatus according to the present embodiment is same as that illustrated in FIG. 1 and FIG. 2, the following description will be provided with reference to FIG. 1 and FIG. 2.

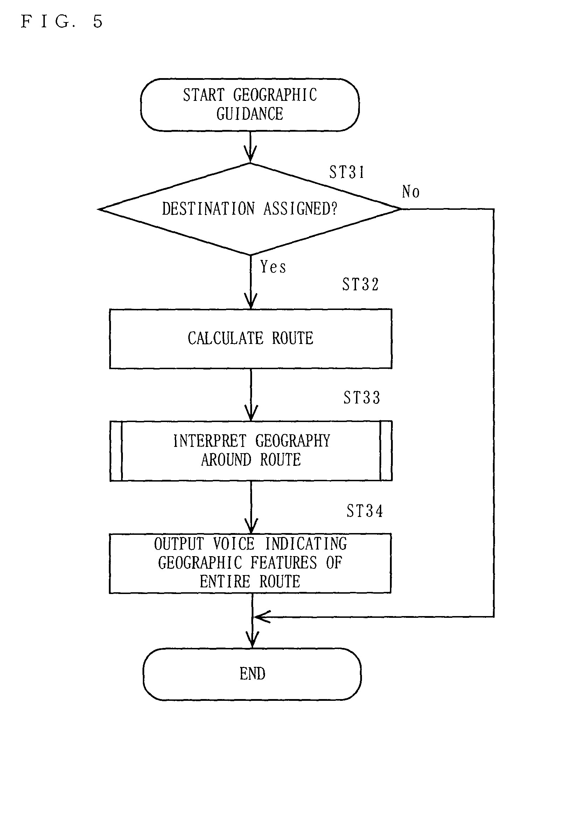

Next, with reference to a flowchart of FIG. 5, a processing procedure of geographic guidance by the navigation apparatus according to the present embodiment will be described below. In FIG. 5, a process control section 17 determines whether a destination is assigned or not (step ST31) same as in step ST11 of FIG. 3. When determined as NO, the process control section 17 terminates the process shown in FIG. 5.

On the other hand, when determined as YES, the process control section 17 detects a current position of the user by using an output from a GPS module 14 and/or an autonomous navigation sensor 15. Then, the process control section 17 calculates a route from the detected current position to the assigned destination using map data stored in a memory card 11 (step ST32) . Note that although in the description of the present embodiment the route is searched by setting the detected current position as a starting point, it is not limited thereto, the user may assign a starting point by operating an operation section 16. In addition, the navigation apparatus may be configured as to allow the user to give a direction, when the searched route is not preferable, to search the route again by changing a condition for searching the route.

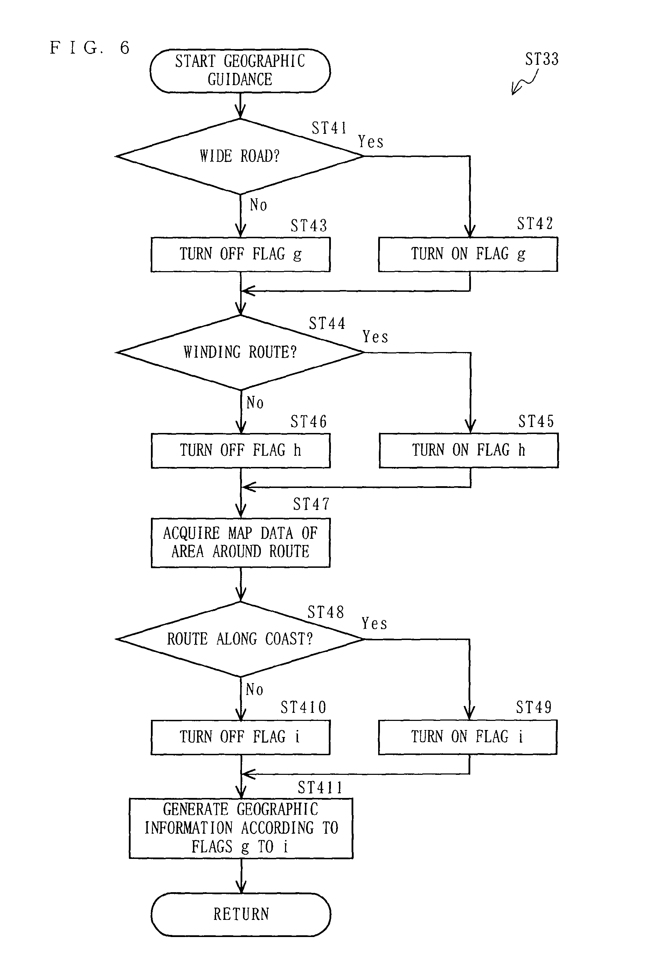

Next, the process control section 17 interprets geography of an area around the route calculated at step ST32 (step ST33). FIG. 6 is a flowchart illustrating detailed processing procedure of step ST33 denoted in FIG. 5. In FIG. 6, in order to determine whether the calculated route is comfortable for driving or not, the process control section 17 acquires road width attribute information provided for every road section (i.e., link), which configures the calculated route, and determines whether the calculated route is comprised of relatively wide roads or not, based on such information (step ST41). When determined as YES, the process control section 17 sets on flag g, indicating that the route is comfortable for driving (step ST42). On the other hand when determined as NO, the process control section 17 sets off flag g (step ST43).

After Step ST42 or ST43, the process control section 17 counts the number of curved locations in the calculated route and determines whether the calculated route is winding or not, based on the counted number (step ST44) . When determined as YES, the process control section 17 sets on flag h, indicating that the route has many curved locations (step ST45). On the other hand, when determined as NO, the process control section 17 sets off flag h (step ST46).

Next, the process control section 17 acquires, by the same procedure as in step ST21 of FIG. 4, a section of an area around the calculated route from the map data stored in the memory card 11 (Step ST47). Thereafter, the process control section 17 determines, by the same procedure as in step ST26 of FIG. 3, whether a color code for drawing a sea exists in a wide area around the route (step ST48). When determined as YES, the process control section 17 sets on flag i, which indicates that the route has a nice view (step ST49). When determined as NO, the process control section 17 sets off flag i (step ST410).

After step ST49 or ST410, the process control section 17 generates geographic information according to flags g to i, and outputs the information to a voice processing section18 (step ST411). To give a specific example, when flags g and i are set on, the process control section 17 generates geographic information indicating contents such as "the route is comfortable for driving with a nice view". Once above step ST411 is completed, the process control section 17 terminates the process of FIG. 6, i.e., step ST33 of FIG. 5.

In FIG. 5, the voice processing section 18 and a loudspeaker 13 operates as same as step ST13 of FIG. 3 (step ST34). As a result, the loudspeaker 13 provides geographic guidance such as "the route is comfortable for driving with a nice view".

As described above, according to the present navigation apparatus, the user can acquire geographic guidance as a voice output for the area around the route only by assigning at least the destination. Therefore , it is made possible to provide a navigation apparatus which allows the user to acquire geographic information without depending on a display.

In addition, according the present navigation apparatus, the process control section 17 generates geographic information on an area around the destination based on a color code for drawing a polygon, or the calculated route. Consequently, the necessity of having data dedicated for generating geographic information prepared in the map data of the memory card is omitted. In other words, the process control section 17 is capable of providing geographic guidance with use of the map data which already exists.

Though in FIG. 6, the process control section 17 determines whether the route is along the coast or not, it is not limited thereto, the decision may be made on whether the route is along a mountain, a river, a lake or pond, or a railroad.

Also in FIG. 5, though the navigation apparatus is configured so as to provide the user with geographic information of an area around the route, it is not limited thereto, the navigation apparatus may be configured to perform ST12 of FIG. 3 before step ST34 of FIG. 5 so as to provide the user with geographic information of an area around the destination and around the route.

### (Third Embodiment)

A third embodiment of the present invention will be described next. As a structure of a navigation apparatus according to the present embodiment is same as that illustrated in FIG. 1 and FIG. 2, the following description will be provided with reference to FIG. 1 and FIG. 2. However, an operation section 16 includes a button or a key assigned with a function of requesting geographic guidance in addition to inputting a destination.

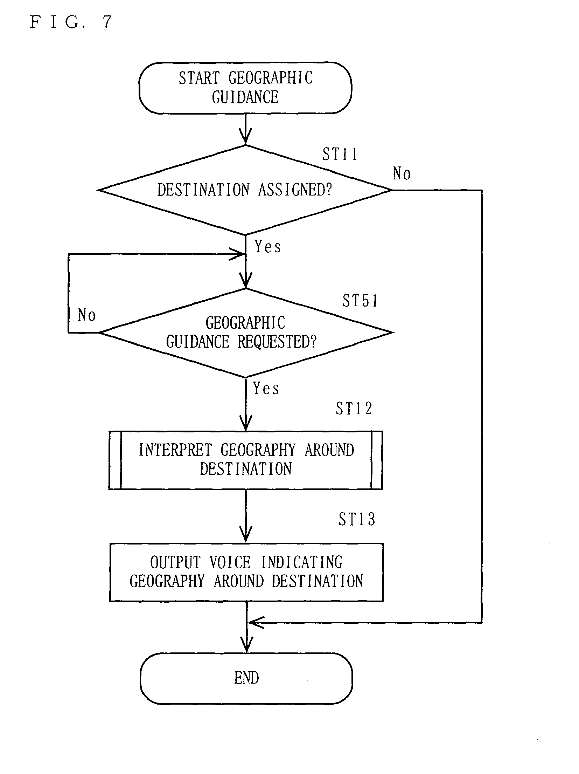

Next, with reference to a flowchart in FIG. 7, a processing procedure for providing geographic guidance according to the present navigation apparatus will be described below. When comparing FIG. 7 with FIG. 3, FIG. 7 differs in that it further includes step ST51. Since there is no other difference between the two flowcharts, steps in FIG. 7 which are equivalent to those of FIG. 3 will be provided with same step numbers, and descriptions of those steps will be omitted here.

In FIG. 7, a process control section 17 determines, after step ST11, whether a user is requesting geographic guidance or not, based on an input from the operation section 16 (step ST51) . When determined as YES, the process control section 17 performs step ST12. On the other hand, when determined as NO, the process control section 17 waits at step ST51 for a YES decision.

As described above, the present navigation apparatus is capable of providing geographic information when requested by the user. Therefore, it is made possible to provide a navigation apparatus with improved usability.

### (Fourth Embodiment)

A fourth embodiment of the present invention will be described next. As a structure of a navigation apparatus according to the present embodiment is same as that illustrated in FIG. 1 and FIG. 2, the following description will be provided with reference to FIG. 1 and FIG. 2. However, an operation section 16 includes a button or a key assigned with a function of requesting geographic guidance in addition to inputting a destination.

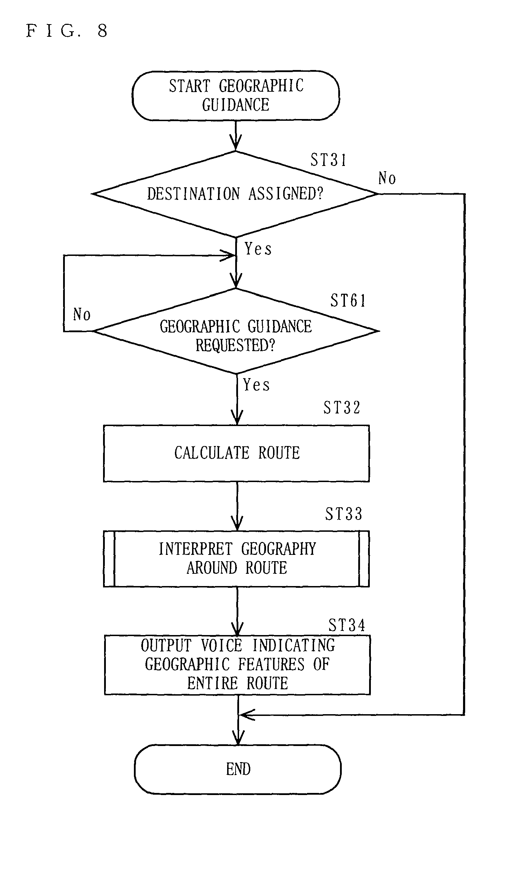

Next, with reference to a flowchart in FIG. 8, a processing procedure for providing geographic guidance according to the present navigation apparatus will be described below. When comparing FIG. 8 with FIG. 5, FIG. 8 differs in that it further includes step ST61. Since there is no other difference between the two flowcharts, steps in FIG. 8 which are equivalent to those of FIG. 5 will be provided with same step numbers, and descriptions of those steps will be omitted here.

In FIG. 8, a process control section 17 determines, after step ST31, whether a user is requesting geographic guidance or not, based on an input from the operation section 16 (step ST61) . Note that step ST61 may be performed subsequent to step ST32, since there is a case when route guidance for guiding the user to the destination is provided after calculating the route. Thus, step ST32 may be required to be performed after the destination is assigned at step ST31.

When determined at above step ST61 as YES, the process control section 17 performs step ST32 or ST33 (ST32 in a case exemplified in the diagram). On the other hand, when determined as NO, the process control section 17 waits at step ST61 for a YES decision.

As described above, the present navigation apparatus is capable of providing geographic information when requested by the user. Therefore, it is made possible to provide a navigation apparatus with improved usability.

### (Firth Embodiment)

A firth embodiment of the present invention will be described next. As a structure of a navigation apparatus according to the present embodiment is same as that illustrated in FIG. 1 and FIG. 2, the following description will be provided with reference to FIG. 1 and FIG. 2.

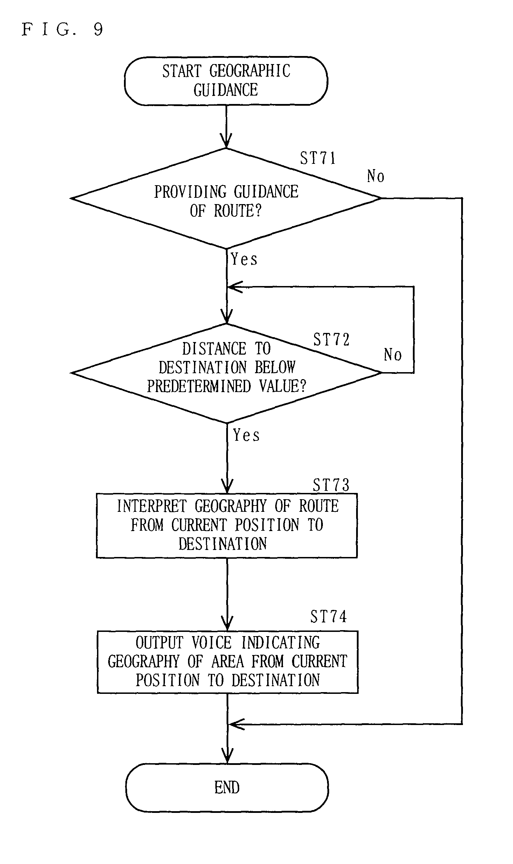

Next, with reference to a flowchart of FIG. 9, a processing procedure for providing geographic guidance according to the present navigation apparatus will be described below. In FIG. 9, a process control section 17 determines whether the route guidance described in the fourth embodiment is performed or not (step ST71). When determined as NO, the process control section 17 terminates the process of FIG. 9. On the other hand, when determined as YES, the process control section 17 calculates a distance from the current position calculated as mentioned above, to the destination, and determines whether the distance to the destination is below a predetermined value or not (step ST72). When determined as NO, the process control section 17 waits at step ST72 for a YES decision.

On the other hand, when determined as YES, the process control section 17 interprets, by the same procedure as step ST33 (refer to FIG. 5), geography of an area around a section from the current position to the destination in the calculated route (step ST73), and then outputs, by the same procedure as step ST34 (refer to FIG. 5), a voice output indicating the geography of the area around the section (step ST74).

As described above, the present navigation apparatus allows the user to acquire geographic information on an area from the current position to the destination when the remaining distance to the destination falls below the predetermined distance. Therefore, it is made possible to provide a navigation apparatus with improved usability.

### (Sixth Embodiment)

A sixth embodiment of the present invention will be described next. As a structure of a navigation apparatus according to the present embodiment is same as that illustrated in FIG. 1 and FIG. 2, the following description will be provided with reference to FIG. 1 and FIG. 2.

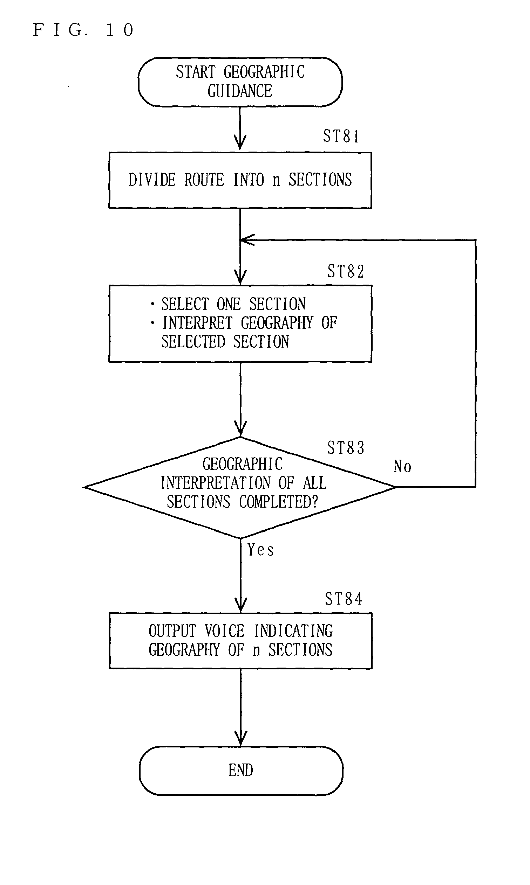

Next, with reference to a flowchart in FIG. 10, a processing procedure for providing geographic guidance according to the present navigation apparatus will be described below. In FIG. 10, a process control section 17 divides, after performing steps ST31 and ST32 (refer to FIG. 5), a calculated route into predetermined n number of sections (step ST81).

The process control section 17 then selects among the divided n sections, a section that is yet not selected, interprets geography of the selected section by the same procedure as around step ST33 (refer to FIG. 5), and generates geographic information

### (step ST82).

Subsequently, the process control section 17 determines whether a process of step ST82 is completed for every n sections or not (step ST83). When determined as NO, the process control section 17 returns to step ST82 to interpret geography of a section which is yet not selected.

On the other hand, when determined as YES, the process control section 17 outputs n pieces of geographic information to a voice processing section 18. In response, the voice processing section 18 and a loudspeaker 13 operates by the same procedure as step ST34 (refer to FIG. 5). Consequently, in accordance with n pieces of geographic information, geographic guidance on each of the n sections is outputted as a voice output through the loudspeaker 13.

As described in the second embodiment, when performing geographic interpretation on an entire route, especially if the route is long, there is high possibility that the geographic guidance provided to the user may be difficult to comprehend. In the navigation apparatus according to the present invention, however, the calculated route is divided into n sections, and then geography of each section is interpreted. Therefore, according to the present navigation apparatus, geographic guidance with high accuracy such as "the route is first along the railroad, then along the coast and the latter half will be along the maintain" can be provided for each section.

Note that though in the embodiment described above, the process control section 17 divides the calculated route, i.e. , a route from the starting point to the destination into n sections, it is not limited thereto, the process control section 17 may be provided so as to divide a section of the route from the current position to the destination into n sections.

### (Seventh Embodiment)

A seventh embodiment of the present invention will be described next. As a structure of a navigation apparatus according to the present embodiment is same as that illustrated in FIG. 1 and FIG. 2, the following description will be provided with reference to FIG. 1 and FIG. 2.

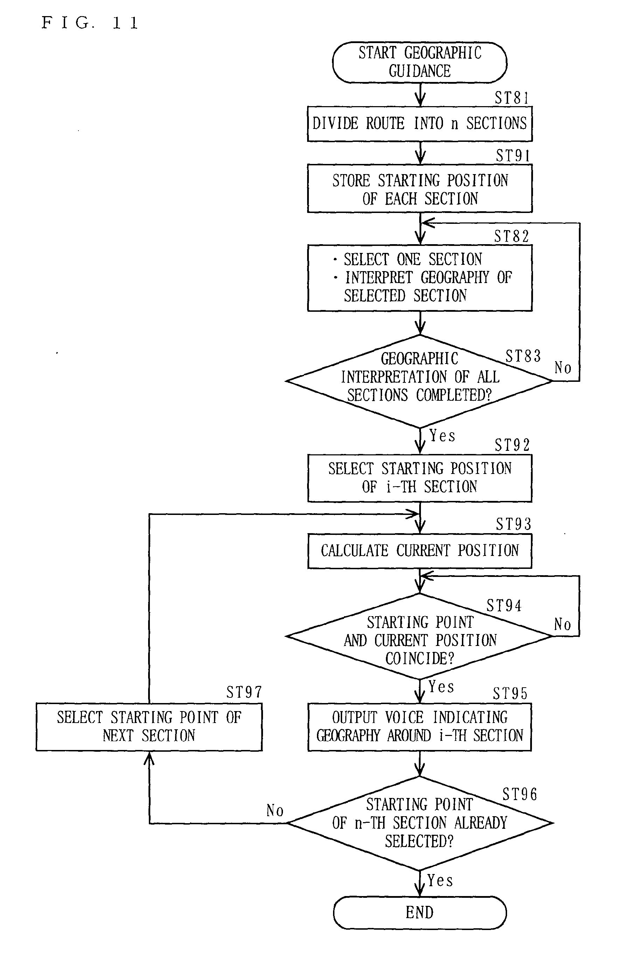

Next, with reference to a flowchart of FIG. 11, a processing procedure for providing geographic guidance according to the present navigation apparatus will be described below. When comparing FIG. 11 with FIG. 10, FIG. 11 differs in that it includes steps ST91 to ST97 in place of ST84. Since there is no other difference between the two flowcharts, steps in FIG. 11 which are equivalent to that of FIG. 10 will be provided with same step numbers , and descriptions of those steps will be omitted here.

Subsequent to step ST81, a process control section 17 stores a starting point of each of the divided n sections (step ST91). Next, the process control section 17 performs steps ST82 and ST83, consequently, generating n pieces of geographic information.

The process control section 17 then selects a starting point of a ith section in the calculated route (step ST92), and further calculates a current position (step ST93). Here, i is a natural number from 1 to n. Next, the process control section 17, determines whether the selected starting point coincides with the current position or not (step ST94). When determined as NO, the process control section 17 waits at step ST94 for a YES decision.

On the other hand, when determined as YES, the process control section 17 selects geographic information on an area around the ith section, and outputs the information to a voice processing section 18. In response, the voice processing section 18 and a loudspeaker 13 operates by the same procedure as step ST34 (refer to FIG. 5). As a result, in accordance with the ith geographic information, geographic guidance of the area around the ith section is outputted as a voice output through the loudspeaker 13 (step ST95).

Subsequently, the process control section 17 determines whether a starting point of the nth section is already selected or not (step ST96). When determined as NO, the process control section 17 selects a starting point of the next section as a starting point of the ith section (step ST97), and performs step ST93. On the other hand, when determined as YES, the process control section 17 terminates the process of FIG. 11.

As described above, according to the present navigation apparatus, geographic guidance with high accuracy can be provided by dividing the route into n sections. Furthermore, since geographic information of each section can be outputted immediately after a vehicle reaches the relevant section, it is made possible to provide geographic guidance which is easier for the user to comprehend.

While the invention has been described in detail, the foregoing description is in all aspects illustrative and not restrictive. It is understood that numerous other modifications and variations can be devised without departing from the scope of the invention.

### INDUSTRIAL APPLICABILITY

A navigation apparatus according to the present invention can be employed in such cases where technical advantage for allowing output of geographic information without depending on a display is required, e.g., a vehicle mounted navigation apparatus.

## Claims

1. A navigation apparatus comprising:
a geography interpreting section for at least interpreting, after a destination is assigned by a user, geography of an area around the destination by using map data stored in a storage medium, and at least generating geographic information for indicating a characteristic of the area around the destination as a voice output; and
a voice output section for outputting the voice output in accordance with the geographic information generated at the geography interpreting section.

2. The navigation apparatus according to claim 1 , wherein the geography interpreting section starts interpreting immediately after a destination is assigned by the user, the geography of the area around the destination.

3. The navigation apparatus according to claim 2, wherein the geography interpreting section at least acquires map data on the area around the destination, and interprets geography thereof, based on a polygon or a map symbol which comprises the acquired map data.

4. The navigation apparatus according to claim 1, further comprising:
a route calculating section for calculating a route to a destination assigned by the user, wherein
the geography interpreting section interprets geography of an area around the route calculated by the route calculating section, and generates geographic information for indicating a characteristic of the area around the route as a voice output.

5. The navigation apparatus according to claim 4, wherein the geography interpreting section at least acquires map data on the area around the route calculated at the route calculating section, and interprets geography thereof, based on a polygon or a map symbol which the obtained map data is comprised of, and/or the route calculated by the route calculating section.

6. The navigation apparatus according to claim 1, further comprising a request determination section for determining whether a request to output the geographic information is made by the user or not, wherein
the geography interpreting section starts to interpret the geography of the area around the destination, after the request determination section determines that an output of the geographic information is requested.

7. The navigation apparatus according to claim 4, further comprising a request determination section for determining whether a request to output the geographic information is made by the user or not, wherein
the geography interpreting section starts to interpret the geography of the area around the route calculated by the route calculating section after the request determination section determines that an output of the geographic information is requested.

8. The navigation apparatus according to claim 4, further comprising a distance determination section for determining whether a distance from a current position to the destination is below a predetermined value or not, wherein
the geography interpreting section interprets, when the distance determination section determines that the distance is below the predetermined value, geography of an area around a section from the current position to the destination of the route calculated by the route calculating section, and generates geographic information for indicating as a voice output, a characteristic of the area around the section to the destination.

9. The navigation apparatus according to claim 4, further comprising a route dividing section for dividing the route calculated by the route calculating section into predetermined number of sections, wherein
the geography interpreting section interprets geography of an area around each section generated at the route dividing section, and generates geographic information indicating a characteristic of the area around each section as a voice output.

10. The navigation apparatus according to claim 9, wherein
the geography interpreting section outputs to the voice output section, based on a starting point of each divided section from the route dividing section and a current position, geographic information which corresponds to one of the divided sections from the route dividing section, and
the voice output section outputs, when geographic information is inputted from the geography interpreting section, a voice output in accordance with the inputted geographic information.
